# FASCICULE DE BREVET EUROPEEN

(11) **EP 3 048 382 B1**
(45) Date de publication et mention de la délivrance du brevet: **15.07.2020**
(21) Numéro de dépôt: 16151788.3
(22) Date de dépôt: 19.01.2016
(51) Int. Cl.: F24F 11/00

(54) **PROCÉDÉ DE DÉTERMINATION DU TAUX D ENCRASSEMENT D AU MOINS UN FILTRE D'UN SYSTÈME DE VENTILATION ET SYSTÈME DE VENTILATION ASSOCIÉ**
VERFAHREN ZUR BESTIMMUNG DES VERSCHMUTZUNGSGRADS MINDESTENS EINES FILTERS EINES BELÜFTUNGSSYSTEMS, UND ENTSPRECHENDES BELÜFTUNGSSYSTEM
METHOD FOR DETERMINING THE FOULING RATE OF AT LEAST ONE FILTER OF A VENTILATION SYSTEM AND ASSOCIATED VENTILATION SYSTEM

(30) Priorité: 21.01.2015 FR 1550460
(43) Date de publication de la demande: 27.07.2016
(73) Titulaire: ALDES AERAULIQUE, 69200 Venissieux Cedex (FR)
(72) Inventeur: BUSEYNE, Serge, 31200 TOULOUSE (FR); LABAUME, Damien, 31570 PRESERVILLE (FR)
(74) Mandataire: Chevalier, Renaud Philippe

(56) Documents cités:
- EP-A1- 0 908 341
- EP-A2- 1 102 013
- EP-A2- 1 406 048
- US-A1- 2013 197 829
- US-B1- 8 029 608

## Description

La présente invention concerne le domaine des systèmes de ventilation pour bâtiment et plus particulièrement les systèmes de ventilation équipés de filtres d'air.

Classiquement les bâtiments sont ventilés pour des questions de conservation de bâti et d'évacuation des pollutions, les pollutions étant notamment générées par les occupants, le matériel et les machines présents dans le bâtiment et les matériaux du bâti.

Le principe de la ventilation consiste à créer un renouvellement de l'air, par déplacement dans un lieu clos. En l'espèce, la ventilation d'un bâtiment consiste à renouveler l'air intérieur en amenant de l'air extérieur et/ou en recyclant l'air intérieur.

Dans la présente demande, on entendra par air extérieur l'air provenant de l'extérieur du bâtiment. En outre, on entendra par air intérieur l'air ambiant présent dans le bâtiment.

L'air de renouvellement dit air entrant est généralement filtré pour assurer la bonne qualité de l'air dans le bâtiment. La plupart des systèmes de ventilation et/ou de traitement d'air présentent des filtres soit au niveau d'une centrale de traitement d'air pour les réseaux d'air extérieur et/ou intérieur soit au niveau de chaque bouche d'entrée d'air voire également à chaque bouche de sortie d'air.
Il existe plusieurs façons connues de détecter l'encrassement d'un filtre. La première solution consiste à rajouter un pressostat dans le système de ventilation afin qu'il mesure la pression de part et d'autre du filtre. Lorsque la pression augmente et atteint un seuil prédéterminé, le filtre est considéré comme encrassé. L'avantage de cette solution réside dans le fait que l'information d'encrassement peut être immédiatement transmise, en revanche cette solution ne permet pas d'anticiper les interventions de maintenance.

En outre, le document EP908341 décrit un dispositif et un procédé pour déterminer l'état d'un filtre à air dans une installation de chauffage et/ou climatisation de l'habitacle d'un véhicule automobile. Le dispositif du document EP908341 comprend un capteur disposé en sortie d'une buse d'air pour recueillir un flux d'air entrant et traversant un filtre à air. Le dispositif du document EP908341 comprend en outre un manomètre différentiel destiné à mesurer la pression du flux d'air entrant. Le procédé décrit dans le document EP908341 comprend une étape de mesure de pression du flux d'air entrant, une étape de comparaison de la mesure effectuée avec un abaque, ce qui permet de déterminer si le filtre doit être changé ou non.

Une autre solution consiste à utiliser un minuteur préréglé d'usine. Ce minuteur affiche un message d'erreur quand le délai théorique d'encrassement est arrivé à terme. Cette solution est la moins coûteuse car elle met en place un système identique pour tous les filtres et ne nécessite pas une logistique individuelle. Cependant cette solution ne permet pas de connaitre l'état d'encrassement du filtre de manière réelle. En effet, l'encrassement dépend notamment de pollutions dont le taux varie dans le temps, tandis que la solution apportée se base sur un délai de péremption théorique calculé sur une pollution théorique invariable. Ainsi, le message d'erreur peut survenir alors même que le filtre n'est pas encrassé ou bien après que ledit filtre est devenu encrassé.

L'invention a pour but de remédier à tout ou partie des inconvénients précités.

L'invention a pour objet un procédé de détermination du taux d'encrassement d'au moins un filtre d'un système de ventilation et/ou de traitement d'air comprenant les étapes suivantes :
A. Sélection d'au moins un filtre à analyser
B. Détermination de la capacité théorique de filtration du filtre sélectionné en étape A, en fonction de l'efficacité théorique du filtre et la quantité maximale de poussière que peut retenir le filtre de manière théorique.
C. Collecte de données de pollution d'au moins un air entrant dans le système de ventilation et passant par le filtre sélectionné,
D. Mesure du débit de l'air entrant dans le système de ventilation,
E. Calcul de la quantité de poussière retenue par le au moins un filtre sélectionné, à partir des données de pollution de l'air entrant de l'étape C et de la mesure du débit d'air entrant de l'étape D,
F. Répétition de l'étape E pour chaque pas de temps t.
G. Détermination de la quantité de poussière cumulée retenue par le filtre sélectionné à partir des résultats des étapes E et F.
H. Détermination du taux d'encrassement du filtre sélectionné en comparant la quantité de poussière cumulée déterminée à l'étape G avec la capacité théorique du filtre déterminée en étape B.

L'invention présente l'avantage de calculer à chaque pas de temps t la quantité de poussière retenue par le filtre sélectionné, ce qui permet de suivre l'évolution de l'encrassement dudit filtre sélectionné et de savoir quand changer le filtre de manière appropriée. Ainsi, on peut savoir et même anticiper le colmatage des filtres, puisqu'à tout moment, il est possible de connaître leur taux d'encrassement. Il est également possible à partir des données sur le taux d'encrassement de faire un prévisionnel en fonction d'une utilisation passée et à venir.

Selon une autre caractéristique de l'invention, ledit procédé de détermination comprend une étape supplémentaire C1 de mesure de données de pollution, ladite étape C1 étant réalisée avant l'étape C de collecte. Préférentiellement, la mesure de données de pollution de l'étape C1 est réalisée par au moins capteur de pollution du système de ventilation.

Selon une autre caractéristique de l'invention, dans le cas où l'air entrant est de l'air entrant extérieur, l'étape C1 peut être réalisée soit par une centrale météo soit par un organisme spécialisé dans la mesure de pollution soit par au moins un capteur de pollution.

Selon une autre caractéristique de l'invention, le procédé de détermination comprend une étape I d'affichage du taux d'encrassement déterminé en étape H. Ainsi, l'utilisateur peut suivre visuellement l'évolution du taux d'encrassement du ou des filtres du système de ventilation.

Selon une autre caractéristique de l'invention, ledit procédé de détermination comprend une étape J d'alerte du taux d'encrassement du au moins un filtre du système de ventilation. L'étape J permet de prévenir l'utilisateur de la nécessité de changer le ou les filtres encrassés.

Selon une caractéristique de l'invention, ledit procédé de détermination comprend une étape J1 préalable à l'étape J d'alerte, ladite étape J1 étant une étape de comparaison du taux d'encrassement déterminé à l'étape H avec un taux d'encrassement seuil, lorsque le taux d'encrassement déterminé est inférieur au taux d'encrassement seuil, l'étape J n'est pas mise en œuvre, lorsque le taux d'encrassement déterminé est supérieur ou égal au taux d'encrassement seuil alors l'étape J est mise en œuvre.

Avantageusement, le taux d'encrassement seuil correspond au taux d'encrassement considéré comme maximal pour le au moins un filtre.

Selon une autre caractéristique de l'invention, l'alerte du taux d'encrassement de l'étape J est une alerte visuelle.

Selon une autre caractéristique de l'invention, le procédé de détermination comprend en outre une étape K d'alerte préventive. Ladite étape K permet à l'utilisateur de savoir qu'un remplacement de filtre est à envisager.

Selon une caractéristique de l'invention, le procédé de détermination comprend en outre une étape K1 de comparaison du taux d'encrassement déterminé à l'étape H avec un taux d'encrassement seuil de prévention, lorsque le taux d'encrassement déterminé est inférieur au taux d'encrassement seuil de prévention, l'étape K n'est pas mise en œuvre, lorsque le taux d'encrassement déterminé est supérieur ou égal au taux d'encrassement seuil de prévention alors l'étape K est mise en œuvre.

Avantageusement, l'étape K1 est réalisée avant l'étape J1, le taux d'encrassement seuil de prévention étant inférieure au taux d'encrassement seuil.

Selon une caractéristique de l'invention, l'étape K est réalisée après l'étape K1 et avant l'étape J1.

Selon une caractéristique de l'invention, le procédé de détermination fonctionne en continu afin de déterminer l'encrassement de chaque filtre sélectionné.

Selon une autre caractéristique de l'invention, les étapes C et D sont réalisées consécutivement, l'étape C étant réalisée avant ou après l'étape D.

Alternativement, les étapes C et D sont réalisées simultanément.

Selon une autre caractéristique de l'invention, l'air entrant est de l'air extérieur.

Selon une autre caractéristique de l'invention, l'air entrant est de l'air intérieur.

L'invention porte également sur un système de ventilation et/ou de traitement d'air dans un bâtiment configuré pour mettre en œuvre le procédé de détermination du taux d'encrassement d'au moins un filtre selon l'invention, ledit système de ventilation et/ou traitement d'air comprenant :
- au moins une entrée d'air
- au moins une sortie d'air,
- un élément de détermination du débit de l'air entrant,
- au moins un filtre positionné au niveau de la au moins une entrée d'air, ledit filtre étant agencée pour être traversé par un air entrant,
- une unité de contrôle du taux d'encrassement du au moins un filtre, l'unité de contrôle comprenant un calculateur configuré pour déterminer le taux d'encrassement du au moins un filtre à partir de données de pollution de l'air entrant, du débit de l'air entrant, et de la capacité théorique du filtre.

Selon une caractéristique de l'invention, ledit système de ventilation et/ou traitement d'air comprend au moins un capteur de pollution d'air, ledit capteur de pollution coopérant avec l'unité de contrôle du système de ventilation et/ou traitement d'air.

Selon une caractéristique de l'invention, le au moins un capteur de pollution est positionné à l'extérieur du bâtiment et est configuré pour mesurer la pollution d'un air entrant extérieur.

Selon une autre caractéristique de l'invention, le au moins un capteur de pollution est positionné à l'intérieur du bâtiment et est configuré pour mesurer la pollution d'un air entrant intérieur, correspondant à l'air extrait d'une ou plusieurs pièces du bâtiment.

Selon une autre caractéristique de l'invention, l'unité de contrôle du taux d'encrassement comprend en outre un organe d'affichage configuré pour afficher le taux d'encrassement du au moins un filtre sélectionné. Ainsi, l'utilisateur peut suivre l'évolution du taux d'encrassement de chacun des filtres du système de ventilation.

Selon une caractéristique de l'invention, l'unité de contrôle du taux d'encrassement comprend un comparateur configuré pour comparer le taux d'encrassement déterminé avec un taux d'encrassement seuil ou avec un taux d'encrassement seuil de prévention, ledit comparateur coopère avec une unité d'analyse de l'unité de contrôle, l'unité d'analyse étant configurée pour déduire des informations du comparateur une alerte de maintenance qui peut porter par exemple sur le changement du filtre sélectionné de manière obligatoire ou bien de manière préventive.

Selon une caractéristique de l'invention, les alertes de maintenance émises par l'unité de contrôle sont affichées par l'organe d'affichage.

Selon une caractéristique de l'invention, le système de ventilation comprend au moins un organe de régulation du flux d'air positionné à la au moins une entrée d'air et/ou à la au moins une sortie d'air.

Selon une caractéristique de l'invention, le au moins un organe de régulation comprend un débitmètre, ce qui permet de déterminer le débit d'air entrant extérieur et/ou le débit d'air entrant intérieur.

Autrement dit et selon une caractéristique de l'invention, l'élément de détermination de débit d'air entrant est au moins un organe de régulation équipé d'un débitmètre.

Selon une autre caractéristique de l'invention, le au moins un organe de régulation est commandé par une unité de commande du système de ventilation.

Selon une autre caractéristique de l'invention, le système de ventilation comprend au moins un ventilateur d'air entrant extérieur et/ou d'air entrant intérieur.

Selon une caractéristique de l'invention, le débit d'air entrant est obtenu à partir d'un retour d'information d'au moins un ventilateur d'air entrant extérieur et/ou d'air entrant intérieur à l'unité de contrôle du taux d'encrassement.

Autrement dit et selon une caractéristique de l'invention, l'élément de détermination de débit d'air entrant est au moins un ventilateur du système de ventilation.

L'invention sera mieux comprise, grâce à la description ci-après, qui se rapporte à des modes de réalisation selon la présente invention, donnés à titre d'exemples non limitatifs et expliqués avec référence aux dessins schématiques annexés, dans lesquels:
- la figure 1 illustre schématiquement un système de ventilation selon l'invention selon un premier mode de réalisation, associé à au moins une pièce d'un bâtiment,
- la figure 2 illustre schématiquement un système de ventilation selon l'invention selon un deuxième mode de réalisation, associé à plusieurs pièces et/ou logements d'un bâtiment,
- la figure 3 illustre schématiquement un système de ventilation selon l'invention selon un troisième mode de réalisation, associé à une pièce d'un bâtiment.

Dans la présente demande, le système de ventilation et/ou de traitement d'air 1 est appelé ci-après système de ventilation 1.

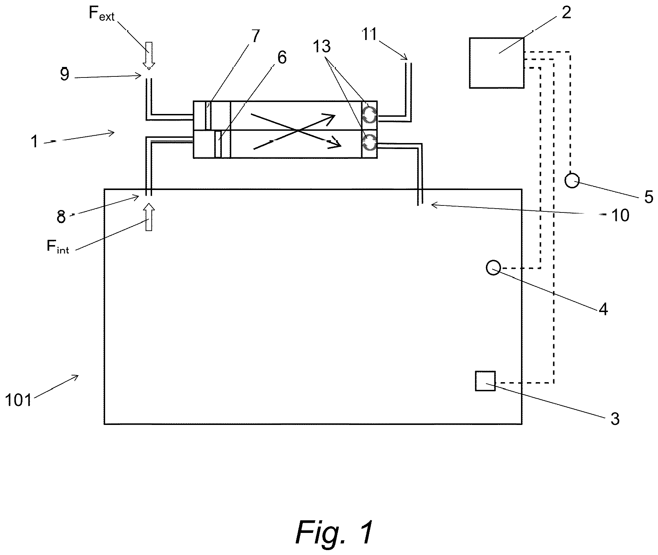

Le premier mode de réalisation du système de ventilation 1 est représenté en figure 1. Dans le premier mode de réalisation, le système de ventilation 1 est un système double flux. Dans l'exemple illustré en figure 1, le système de ventilation est associé à une pièce 101 d'un bâtiment 100. Le système de ventilation 1 selon le premier mode de réalisation, comprend une bouche d'entrée d'air extérieur 9, une bouche d'entrée d'air intérieur 8, et au moins une première bouche de sortie d'air 10 débouchant dans la pièce 101, et une deuxième bouche de sortie d'air 11 débouchant à l'extérieur du bâtiment 100. Un premier filtre d'air entrant 7 est positionné au niveau de la bouche d'entrée d'air extérieur 9. Un deuxième filtre d'air entrant 6 est positionné au niveau de la bouche d'entrée d'air intérieur 8. L'air entrant extérieur Fₑₓₜ et l'air entrant intérieur Fᵢₙₜ sont conduits vers la première bouche de sortie d'air 10 ou la deuxième bouche de sortie d'air 11 au moyen des ventilateurs 13.

Préférentiellement, le débit d'air entrant est donné par un retour d'information des ventilateurs 13. En variante non représentée, le système de ventilation peut comprendre un ou plusieurs organes de régulation équipés d'un débitmètre.

En figure 1, le système de ventilation 1 est équipé d'un capteur de pollution extérieure 5 et d'un capteur de pollution intérieure 4. Bien entendu, le système de ventilation 1 peut comprendre selon l'invention une pluralité de capteurs de pollution extérieure 5 et/ou une pluralité de capteurs de pollution intérieure 4.

Comme représenté en figure 1, le système de ventilation 1 comprend en outre une unité de contrôle du taux d'encrassement 2. Ladite unité de contrôle du taux d'encrassement 2, est configurée pour déterminer le taux d'encrassement des filtres d'air entrant 7, 6, du système de ventilation 1.

L'unité de contrôle du taux d'encrassement 2 comprend un organe d'affichage 3 configuré pour alerter et afficher le taux d'encrassement de chaque filtre 7, 6. Dans l'exemple illustré en figure 1, l'unité de contrôle du taux d'encrassement 2 et l'organe d'affichage 3 sont dissociés. Cet exemple n'est pas limitatif et l'organe d'affichage 3 pourrait être intégré structurellement à l'unité de contrôle du taux d'encrassement 2 de manière alternative et selon l'invention.

La détermination du taux d'encrassement d'un filtre d'air entrant se réalise comme suit. Le filtre à analyser est par exemple le filtre d'air entrant extérieur 7. L'efficacité théorique du filtre d'air entrant extérieur 7 et la quantité maximale de poussière que peut retenir le filtre d'air entrant extérieur 7 de manière théorique sont préenregistrées dans l'unité de contrôle du taux d'encrassement 2 ou connues et standards. On détermine la capacité théorique de filtration du filtre 7 sélectionné à partir de l'efficacité théorique du filtre d'air entrant extérieur 7 et la quantité maximale de poussière que peut retenir le filtre d'air entrant extérieur 7 de manière théorique.

Le capteur de pollution extérieure 5 mesure la pollution extérieure à un temps t en µg/m³ et les données de pollution extérieure sont collectées par l'unité de contrôle du taux d'encrassement 2. Les ventilateurs 13 mesurent le débit d'air entrant extérieur en m³/h et transmettent l'information à l'unité de contrôle du taux d'encrassement 2. L'unité de contrôle du taux d'encrassement 2 calcule ensuite à partir des données recueillies (pollution de l'air entrant extérieur et débit d'air entrant extérieur) la quantité de poussière en µg/m³ passant à travers le filtre d'air entrant extérieur 7. Puis, l'unité de contrôle du taux d'encrassement 2 détermine le taux d'encrassement du filtre d'air entrant extérieur 7 en calculant la quantité de poussière retenue par le filtre sur un pas de temps t et sommant cette valeur à celle déjà retenue par le filtre calculée précédemment. La quantité de poussière cumulée est comparée avec la capacité théorique du filtre déterminée dans une étape précédente.

La détermination du taux d'encrassement du filtre d'air entrant intérieur 6, est réalisée selon le même procédé, la différence portant sur la mesure du débit d'air entrant intérieur et les données de pollution intérieure transmises par le capteur de pollution intérieure 4.

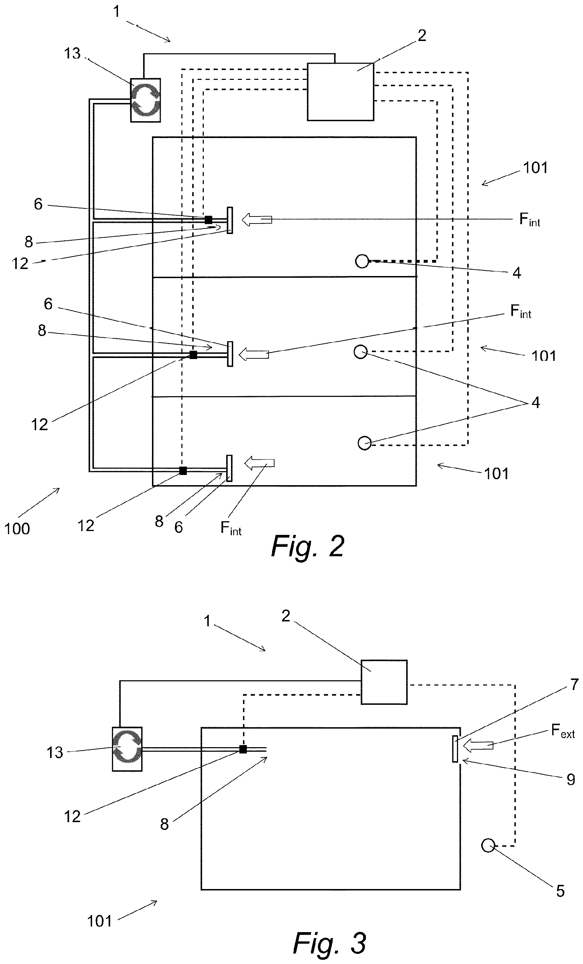

Le deuxième mode de réalisation du système de ventilation 1 est représenté en figure 2. Dans le deuxième mode de réalisation, le système de ventilation 1 est un système simple flux de plusieurs pièces 101 d'un même bâtiment 100. Ce mode de réalisation peut être utilisé également pour les logements collectifs d'un bâtiment 100.

Dans le deuxième mode de réalisation, chaque pièce 101 comprend une bouche d'extraction correspondant à une bouche d'entrée d'air entrant intérieur 8 au niveau de laquelle un filtre d'air entrant 6 est positionné. Le système de ventilation 1 comprend en outre un capteur de pollution intérieure 4 par pièce 101. Le système de ventilation 1 comprend également une unité de contrôle du taux d'encrassement 2 coopérant avec chaque capteur de pollution intérieure 4 afin de déterminer le taux d'encrassement de chaque filtre d'air entrant intérieur 6. En outre, le système de ventilation 1 comprend un organe de régulation 12 pour chaque bouche d'entrée d'air entrant intérieur 8. Chaque organe de régulation 12 est équipé d'un débitmètre.

La détermination du taux d'encrassement d'un filtre d'air entrant intérieur 6 se réalise comme décrit dans le premier mode de réalisation. En utilisant les données de pollution intérieure du capteur de pollution 4 de la pièce 101 dans lequel se trouve le filtre 6 et les données de débit d'air mesurées par l'organe de régulation 12 de la pièce 101 associée.

Le troisième mode de réalisation du système de ventilation 1 est représenté en figure 3. Dans le troisième mode de réalisation, le système de ventilation 1 est un système simple flux pour une pièce 101 d'un bâtiment 100. Ce mode de réalisation peut être utilisé aussi bien pour des logements collectifs que pour des logements individuels.

Dans le troisième mode de réalisation, la pièce 101 comprend une bouche d'extraction correspondant à une bouche d'entrée d'air entrant extérieur 9 au niveau de laquelle un filtre d'air entrant 7 est positionné. Le système de ventilation 1 comprend en outre un capteur de pollution extérieure 5. Le système de ventilation 1 comprend également une unité de contrôle du taux d'encrassement 2 coopérant avec le capteur de pollution extérieure 5 afin de déterminer le taux d'encrassement du filtre d'air entrant extérieur 7. En outre, le système de ventilation 1 comprend un organe de régulation 12 pour la bouche d'extraction 8. L'organe de régulation 12 est équipé d'un débitmètre.

La détermination du taux d'encrassement d'un filtre d'air entrant extérieur 7 se réalise comme décrit dans le premier mode de réalisation. En utilisant les données de pollution extérieure du capteur de pollution extérieure 5 de la pièce 101 dans lequel se trouve le filtre 7 et les données de débit d'air mesurées par l'organe de régulation 12 de la pièce 101 ou par retour d'information du ventilateur 13.

En première variante du premier mode de réalisation et du troisième mode de réalisation, la pollution extérieure est mesurée par une centrale météo.

En deuxième variante du premier mode de réalisation et du troisième mode de réalisation, la pollution extérieure est mesurée par un organisme extérieur et les données de pollutions sont mises à disposition et collectées via internet par exemple, par l'unité de contrôle du taux d'encrassement 2.

En variante de l'un quelconque des modes de réalisation, la mesure de débit d'air est effectuée par un organe de mesure autre que l'organe de régulation équipé d'un débitmètre, par exemple le ventilateur 13.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention, qui est défini par les revendications.

## Revendications

1. Procédé de détermination du taux d'encrassement d'au moins un filtre d'un système de ventilation et/ou de traitement d'air comprenant les étapes suivantes :
A. Sélection d'au moins un filtre à analyser
B. Détermination de la capacité théorique de filtration du filtre sélectionné en étape A, en fonction de l'efficacité théorique du filtre et la quantité maximale de poussière que peut retenir le filtre de manière théorique.
C. Collecte de données de pollution d'au moins un air entrant dans le système de ventilation et passant par le filtre sélectionné,
D. Mesure du débit de l'air entrant dans le système de ventilation,
E. Calcul de la quantité de poussière retenue par le au moins un filtre sélectionné, à partir des données de pollution de l'air entrant de l'étape C et de la mesure du débit d'air entrant de l'étape D,
F. Répétition de l'étape E pour chaque pas de temps t.
G. Détermination de la quantité de poussière cumulée retenue par le filtre sélectionné à partir des résultats des étapes E et F.
H. Détermination du taux d'encrassement du filtre sélectionné en comparant la quantité de poussière cumulée déterminée à l'étape G avec la capacité théorique du filtre déterminée en étape B.

2. Procédé de détermination selon la revendication 1, **caractérisé en ce que** ledit procédé de détermination comprend une étape supplémentaire C1 de mesure de données de pollution, ladite étape C1 étant réalisée avant l'étape C de collecte.

3. Procédé de détermination selon l'une quelconque des revendications 1 ou 2, dans lequel le procédé de détermination comprend une étape I d'affichage du taux d'encrassement déterminé en étape H.

4. Procédé de détermination selon l'une quelconque des revendications 1 à 3, dans lequel ledit procédé de détermination comprend une étape J d'alerte du taux d'encrassement.

5. Procédé de détermination selon la revendication 4, dans lequel ledit procédé de détermination comprend une étape J1 préalable à l'étape J d'alerte, ladite étape J1 étant une étape de comparaison du taux d'encrassement déterminé à l'étape H avec un taux d'encrassement seuil, lorsque le taux d'encrassement déterminé est inférieur au taux d'encrassement seuil, l'étape J n'est pas mise en œuvre, lorsque le taux d'encrassement déterminé est supérieur ou égal au taux d'encrassement seuil alors l'étape J est mise en œuvre.

6. Procédé de détermination selon l'une quelconque des revendications 1 à 5, dans lequel les étapes C et D sont réalisées consécutivement, l'étape C étant réalisée avant ou après l'étape D ou les étapes C et D sont réalisées simultanément.

7. Procédé de détermination selon l'une quelconque des revendications 1 à 6, dans lequel l'air entrant est de l'air extérieur.

8. Procédé de détermination selon l'une quelconque des revendications 1 à 7, dans lequel l'air entrant est de l'air intérieur.

9. Système de ventilation et/ou de traitement d'air dans un bâtiment configuré pour mettre en œuvre le procédé de détermination du taux d'encrassement d'au moins un filtre selon l'une quelconque des revendications 1 à 8, ledit système de ventilation et/ou traitement d'air comprenant :
- au moins une entrée d'air,
- au moins une sortie d'air,
- un élément de détermination de débit d'air entrant,
- au moins un filtre positionné au niveau de la au moins une entrée d'air, ledit filtre étant agencée pour être traversé par un air entrant,
- une unité de contrôle du taux d'encrassement du au moins un filtre, **caractérisé en ce que** l'unité de contrôle comprend un calculateur configuré pour déterminer le taux d'encrassement du au moins un filtre à partir de données de pollution de l'air entrant, du débit de l'air entrant, et de la capacité théorique du filtre

10. Système de ventilation et/ou de traitement d'air selon la revendication 9, comprenant au moins un capteur de pollution d'air, ledit capteur de pollution coopérant avec l'unité de contrôle du système de ventilation et/ou traitement d'air.

## Patentansprüche

1. Verfahren zur Bestimmung des Verschmutzungsgrads mindestens eines Filters eines Belüftungs- und/oder Luftbehandlungssystems, umfassend folgende Schritte:
A. Auswählen mindestens eines Filters, der analysiert werden soll
B. Bestimmen der theoretischen Filterkapazität des in Schritt A ausgewählten Filters, in Abhängigkeit von dem theoretischen Wirkungsgrad des Filters und der maximalen Staubmenge, die der Filter theoretisch festhalten kann.
C. Sammeln von Verschmutzungsdaten mindestens einer Luft, die in das Belüftungssystem eintritt und durch den ausgewählten Filter hindurchläuft,
D. Messen des Luftdurchsatzes, der in das Belüftungssystem eintritt,
E. Berechnen der Staubmenge, die von dem mindestens einen ausgewählten Filter festgehalten wird, ausgehend von den Verschmutzungsdaten der eintretenden Luft von Schritt C und der Messung des eintretenden Luftdurchsatzes von Schritt D,
F. Wiederholen von Schritt E für jeden Zeitschritt t.
G. Bestimmen der kumulierten Staubmenge, die von dem ausgewählten Filter festgehalten wird, ausgehend von den Ergebnissen der Schritte E und F.
H. Bestimmen des Verschmutzungsgrads des ausgewählten Filters, indem die in Schritt G bestimmte kumulierte Staubmenge mit der in Schritt B bestimmten theoretischen Filterkapazität verglichen wird.

2. Verfahren zur Bestimmung nach Anspruch 1, **dadurch gekennzeichnet, dass** das Verfahren zur Bestimmung einen zusätzlichen Schritt C1 zum Messen von Verschmutzungsdaten umfasst, wobei Schritt C1 vor dem Schritt C zum Sammeln ausgeführt wird.

3. Verfahren zur Bestimmung nach einem der Ansprüche 1 oder 2, wobei das Verfahren zur Bestimmung einen Schritt I zum Anzeigen des in Schritt H bestimmten Verschmutzungsgrads umfasst.

4. Verfahren zur Bestimmung nach einem der Ansprüche 1 bis 3, wobei das Verfahren zur Bestimmung einen Schritt J zum Melden des Verschmutzungsgrads umfasst.

5. Verfahren zur Bestimmung nach Anspruch 4, wobei das Verfahren zur Bestimmung einen Schritt J1 vor dem Schritt J zum Melden umfasst, wobei der Schritt J1 ein Schritt zum Vergleichen des in Schritt H bestimmten Verschmutzungsgrads mit einem Verschmutzungsgrad-Grenzwert ist, wenn der bestimmte Verschmutzungsgrad geringer als der Verschmutzungsgrad-Grenzwert ist, der Schritt J nicht ausgeführt wird, wenn der bestimmte Verschmutzungsgrad höher als oder gleich wie der Verschmutzungsgrad-Grenzwert ist, dann der Schritt J ausgeführt wird.

6. Verfahren zur Bestimmung nach einem der Ansprüche 1 bis 5, wobei die Schritte C und D nacheinander ausgeführt werden, dabei der Schritt C vor oder nach dem Schritt D ausgeführt wird, oder die Schritte C und D gleichzeitig ausgeführt werden.

7. Verfahren zur Bestimmung nach einem der Ansprüche 1 bis 6, wobei die eintretende Luft Außenluft ist.

8. Verfahren zur Bestimmung nach einem der Ansprüche 1 bis 7, wobei die eintretende Luft Innenluft ist.

9. Belüftungs- und/oder Luftbehandlungssystem in einem Gebäude, das ausgestaltet ist, das Verfahren zur Bestimmung des Verschmutzungsgrads mindestens eines Filters nach einem der Ansprüche 1 bis 8 auszuführen, wobei das Belüftungs- und/oder Luftbehandlungssystem umfasst:
- mindestens einen Lufteintritt,
- mindestens einen Luftaustritt,
- ein Element zum Bestimmen des eintretenden Luftdurchsatzes,
- mindestens einen Filter, der auf Höhe des mindestens einen Lufteintritts positioniert ist, wobei der Filter so angeordnet ist, dass er von einer eintretenden Luft durchsetzt wird,
- eine Kontrolleinheit des Verschmutzungsgrads des mindestens einen Filter, **dadurch gekennzeichnet, dass** die Kontrolleinheit einen Rechner umfasst, der ausgestaltet ist, den Verschmutzungsgrad des mindestens einen Filters ausgehend von Verschmutzungsdaten der eintretenden Luft, dem Durchsatz der eintretenden Luft und der theoretischen Filterkapazität zu bestimmen.

10. Belüftungs- und/oder Luftbehandlungssystem nach Anspruch 9, umfassend mindestens einen Luftverschmutzungssensor, wobei der Verschmutzungssensor mit der Kontrolleinheit des Belüftungs- und/oder Luftbehandlungssystems zusammenwirkt.

## Claims

1. A method for determining the fouling factor of at least one filter of a ventilation and/or air processing system comprising the following steps:
A. Selecting at least one filter to be analyzed
B. Determining the theoretical filtration capacity of the filter selected in step A, depending on the theoretical efficiency of the filter and the maximum amount of dust that can be theoretically retained by the filter.
C. Collecting pollution data of at least one air entering the ventilation system and passing through the selected filter,
D. Measuring the flow rate of the air entering the ventilation system,
E. Calculating the amount of dust retained by the at least one selected filter, from the pollution data of the entering air of step C and from the measurement of the entering air flow rate of step D,
F. Repeating step E for each time step t.
G. Determining the amount of accumulated dust retained by the selected filter from the results of steps E and F.
H. Determining the fouling factor of the selected filter by comparing the accumulated dust amount determined at step G with the theoretical capacity of the filter determined in step B.

2. The determination method according to claim 1, **characterized in that** said determination method comprises an additional step C1 of measuring pollution data, said step C1 being carried out before the collection step C.

3. The determination method according to any one of claims 1 or 2, wherein the determination method comprises a step I of displaying the fouling factor determined in step H.

4. The determination method according to any one of claims 1 to 3, wherein said determination method comprises a step J of alerting the fouling factor.

5. The determination method according to claim 4, wherein said determination method comprises a step J1 prior to the alerting step J, said step J1 being a step of comparing the fouling factor determined in step H with a fouling factor threshold, when the determined fouling factor is lower than the fouling rate threshold, step J is not implemented, when the determined fouling rate is higher or equal to the fouling rate threshold, then step J is implemented.

6. The determination method according to any one of claims 1 to 5, wherein steps C and D are carried out consecutively, step C being carried out before or after step D or steps C and D are simultaneously carried out.

7. The determination method according to any one of claims 1 to 6, wherein the entering air is outdoor air.

8. The determination method according to any one of claims 1 to 7, wherein the entering air is indoor air.

9. A ventilation and/or air processing system in a building configured to implement the method for determining the fouling factor of at least one filter according to any one of claims 1 to 8, said ventilation and/or air processing system comprising:
- at least one air inlet,
- at least one air outlet,
- an element of determining the flow rate of the entering air,
- at least one filter positioned at the at least one air inlet, said filter being arranged to be traversed by an entering air,
- a unit of controlling the fouling factor of the at least one filter, **characterized in that** the control unit comprises a calculator configured to determine the fouling factor of at least one filter from the pollution data of the entering air, the flow rate of the entering air, and the theoretical capacity of the filter.

10. The ventilation and/or air processing system according to claim 9, comprising at least one air pollution sensor, said pollution sensor cooperating with the control unit of the ventilation and/or air processing system.
